# EUROPEAN PATENT SPECIFICATION

(11) **EP 1 163 276 B1**
(45) Date of publication and mention of the grant of the patent: **03.11.2004**
(21) Application number: 00913603.7
(22) Date of filing: 25.02.2000
(51) Int. Cl.: C08F 8/44

(54) **AQUEOUS DISPERSION COMPOSITION AND MANUFACTURING METHOD FOR THE COMPOSITION**
WÄSSRIGE DISPERSIONSZUSAMMENSETZUNG UND VERFAHREN ZUR HERSTELLUNG DAVON
COMPOSITION D'UNE DISPERSION AQUEUSE ET PROCEDE DE FABRICATION DE CETTE COMPOSITION

(30) Priority: 25.02.1999 JP 4887299
(43) Date of publication of application: 19.12.2001
(73) Proprietor: E. I. du Pont de Nemours and Company, Wilmington, Delaware 19898 (US)
(72) Inventor: NAKATA, Kazuyuki, Ichihara-shi, Chiba-ken (JP)
(74) Representative: Abitz, Walter, Dr.-Ing.
(86) International application number: PCT/US2000/004754
(87) International publication number: WO 2000/050473

(56) References cited:
- EP-A- 0 523 993
- EP-A- 0 842 954
- WO-A-92/13012
- BE-A- 657 147
- CH-A- 476 041
- GB-A- 1 559 048
- GB-A- 2 269 822
- US-A- 3 674 896
- US-A- 5 430 111
- DATABASE WPI Section Ch, Week 9832 Derwent Publications Ltd., London, GB; Class A14, AN 1998-371144 XP002141301 & JP 10 147683 A (MITSUI DU PONT POLYCHEMICAL KK), 2 June 1998 (1998-06-02)

## Description

### FIELD OF THE INVENTION

The present invention relates to an aqueous dispersion composition having good stability and dispersion properties and a process for making it by dispersing an ethylene-methacrylic acid copolymer in water using an amount of ammonia in excess of amount that would be needed to neutralize methacrylic acid. It also relates to the application of this aqueous dispersion in making coated substrates.

### BACKGROUND OF THE INVENTION

Aqueous dispersion compositions of ethylene α,β-ethylenically unsaturated carboxylic acid copolymers such as ethylene-acrylic acid copolymer or ethylene-methacrylic acid copolymer are known and sold commercially. They can be easily made by dispersing the readily available ethylene acid copolymers in water using an alkali metal compound and are useful in various applications such as coating film. However, because the film coated with such dispersion compositions has a poor waterproofness, it cannot be used for applications requiring a film that is waterproof.

It is known that an ethylene-acrylic acid copolymer can be used as an excellent raw material for an aqueous dispersion composition obtained using ammonia as dispersion aide, see for example U.S. 3,674,896 and GB 2,269,822. Although it has been difficult to obtain an aqueous dispersion composition using ammonia alone, a film coated with such aqueous dispersion should have a good waterproofness since there is no alkali ion to absorb water.

GB 1,559,048 describes an aqueous dispersion of ethylene-methacrylic acid copolymer partially neutralized with metallic and/or ammonium. The aqueous dispersion may be used for coating substrates.

Uniformly dispersing ethylene-methacrylic acid copolymer in water using a mixture of ammonia and an alkali metal has been known to be difficult. Such aqueous dispersions of ethylene-methacrylic acid copolymer could be obtained by adding small amounts of a surfactant as a supplemental disperser. However, because the coated film using such dispersions have both poor waterproofness and bleed-out, causing contamination, it was not preferred.

An object of this invention is to find a way to use ammonia alone as a dispersion aide to make a uniform aqueous dispersion composition of an ethylene-methacrylic acid copolymer that is stable for a long time, that is has a good shelf-life of say a year or more. Another object was to find a way to make a film (or other substrate) that when coated with such an aqueous dispersion would have good waterproofness.

### SUMMARY OF THE INVENTION

Attempts to obtain such an aqueous dispersion of ethylene-methacrylic acid copolymer using ammonia in an amount equivalent to that of the carboxyl groups contained in an ethylene-methacrylic acid copolymer were unsuccessful in making uniform dispersions.

With continued research, it was found that a stable, uniform aqueous dispersion of ethylene-methacrylic acid copolymer could be obtained using an ethylene-methacrylic acid copolymer containing specific amounts of acid, and using ammonia in an amount greater than the amount of the carboxyl groups in the copolymer. It was also found that coating a film (or other substrate) with such an aqueous dispersion could make a waterproof, coated film (or other substrate).

The present invention, claiming priority to Japanese Patent Application No. Hei 11[1999]-48872, relates to a process for making a uniform aqueous dispersion of ethylene-methacrylic acid copolymer having good dispersion stability and to the aqueous dispersion made from such process. It also relates to a coated substrate such as a film that, when coated with the aqueous dispersion of the present invention, has good waterproof properties. It also relates to a laminate obtained by applying the above-mentioned aqueous dispersion composition on a substrate for coating and drying to form a coated substrate.

The stable, uniform aqueous dispersion of the present invention consists essentially of a dispersion of component (A), an ethylene-methacrylic acid copolymer containing 15-35 wt% of methacrylic acid, and component (B), ammonia in an amount required for neutralizing 110-150% of the carboxyl groups of component (A) in water. The ethylene-methacrylic acid copolymer preferably comprises 5-50 wt% of the dispersion and preferably has a melt flow rate of 50-2000 grams/10 minutes at 190°C/2160 gram load. Surfactants and the like are not needed and preferably are not used.

### DETAILED DESCRIPTION OF THE INVENTION

"Consisting essentially of" means that the recited components are essential, while smaller amounts of other components may be present to the extent that they do not detract from the operability of the present invention.

"Copolymer" means polymers containing two or more monomers.

A stable, uniform ethylene acid-containing copolymer aqueous dispersion composition can be obtained by mixing selected ethylene methacrylic acid copolymer in water in the presence of an excess amount of ammonia.

The ethylene acid-containing copolymer aqueous dispersion of the present invention consists essentially of a dispersion of component (A), an ethylene-methacrylic acid copolymer containing 15-35 wt% of methacrylic acid as the ethylene acid-containing copolymer, in water in the presence of component (B), ammonia used as a basic component in an amount greater than the amount of the carboxyl groups of component (A).

Both good dispersion property and good dispersion stability can be obtained by using an excess of component (B) ammonia, namely an amount sufficient for neutralizing 110-150% of the carboxyl groups of the above-mentioned acid-containing copolymer (A). The resulting aqueous dispersion can be coated onto a substrate, such as a film, to make a coated substrate, particularly a coated film, that is not susceptible to moisture accumulation and has a good waterproofness.

The ethylene-methacrylic acid copolymer (A) contain 15-35 wt% or alternatively 15-25 wt%, particularly 18-30 wt%, of the unsaturated carboxylic acid. In the case of using a copolymer containing an unsaturated carboxylic acid in an amount that is less than the above-mentioned range, it is difficult to obtain a composition having a good aqueous dispersion property. In the case of using a copolymer containing an unsaturated carboxylic acid in an amount that is more than the above-mentioned range, a stable dispersion composition cannot be obtained and both the waterproofness and mechanical strength of the coated film are reduced.

An ethylene-methacrylic acid copolymer having a melt flow rate of 50-2000 grams/10 minutes, particularly 60-1500, at 190°C/2160 gram load is suitable. In the case of using a methacrylic acid copolymer having an extremely low melt flow rate, an aqueous dispersion composition having a good dispersion property cannot be obtained. When using a copolymer having an excessively high melt flow rate, the coated film has a poor strength.

Besides ethylene and methacrylic acid, the copolymer may be copolymerized with other monomers including an unsaturated carboxylic acid ester such as methyl acrylate, ethyl acrylate, n-butyl acrylate, isobutyl acrylate, methyl methacrylate, isobutyl methacrylate, dimethyl maleate, or diethyl maleate; a vinyl ester such as vinyl acetate or vinyl propionate; and carbon monoxide, in an amount of 20 wt% or less, particularly 10 wt% or less.

The aqueous dispersion composition of the present invention contains ammonia, which can neutralize an excess, particularly 110-150%, more particularly 120-140% of the carboxyl groups of copolymer (A), along with copolymer (A).

In the case of an aqueous dispersion composition of the present invention containing a lower amount of ammonia than the above-mentioned range, a stable aqueous dispersion composition cannot be obtained. In the case of an aqueous dispersion composition of the present invention containing a higher amount of ammonia than the above-mentioned range, gelling easily occurs.

The aqueous dispersion composition suitably has the copolymer (A) present in an amount of 5-50 wt%, preferably 5-30 wt%, and particularly 10-30 wt%.

The aqueous dispersion composition is obtained by introducing both ethylene-methacrylic acid copolymer (A) and ammonia (B) with water into a vessel, then stirring them at about 90 to about 150°C for a sufficient time to uniformly disperse the ethylene-methacrylic acid copolymer (A), preferably about 10 minutes to about 2 hours.

The aqueous dispersion composition has good stability and good shelf life, such that neither the particle size nor the viscosity is significantly changed over times of up to a year or more.

### Additives

A variety of additives can be added to the aqueous dispersion composition if desired.

Examples of additives include polyalcohols such as glycerin, ethylene glycol, polyethylene glycol, and polypropylene glycol; lower alcohols such as water-soluble epoxy compounds, methanol, ethanol, n-propanol, or isopropanol; ethers such as ethylene glycol monomethyl ether, ethylene glycol monoethyl ether, propylene glycol monomethyl ether, propylene glycol diethyl ether, diethylene glycol monoethyl ether, and dipropylene glycol monomethyl ether; esters such as propylene glycol monoacetate and ethylene glycol monoacetate; antioxidants; weather resistant stabilizers; ultraviolet-ray absorbents; antistatic agents; pigments; dyestuffs; antibacterial agents; lubricants; inorganic fillers; blocking preventing agents; and adhesives.

### Other Polymer Aqueous Dispersion Compositions

The aqueous dispersion composition of the present invention may be mixed with other polymer aqueous dispersion compositions ("Other Dispersions") with a weight ratio based on the solid components in the dispersions of about 10/90 to about 90/10, particularly 20/80-80/20.

The Other Dispersion(s) with which the aqueous dispersion composition of the present invention may effectively be mixed should have a pH of 7 or more. If the pH of the Other Dispersion(s) is less than 7, it should be adjusted with ammonia to obtain a pH of 7 or more before mixing. Also, the Other Dispersion should be one that is not gelled when it is mixed with the aqueous dispersion composition of the present invention. It is suitable to choose Other Dispersion(s) having an average particle size of 1-10000, preferably 1-1000, particularly 5-500 nanometers (nm), and having a solid component amount of 2-60 wt%, particularly 5-50 wt% of the dispersion. Preferably the particle size of the Other Dispersion(s) should be substantially the same as the dispersion of the present invention.

Examples of the Other Dispersion(s) include aqueous dispersions of ethylene-acrylic acid copolymer (particularly those made using ammonia alone as dispersing agent), polyvinyl acetate, ethylene-vinyl acetate copolymer, polyvinyl chloride, polyvinylidene chloride, water-soluble acryl resins, acrylamide resins, methacrylamide resins, acrylonitrile resins, styrene-acrylic acid copolymer, water-soluble polyurethane resins, water-soluble styrene-maleic acid copolymers, water-soluble polyurethane resins, styrene-butadiene copolymers, high-impact polystyrene resins, butadiene resins, polyester resins, acrylonitrile-butadiene copolymers, polyethylene resins, polyethylene oxide resins, polypropylene-ethylene copolymers, maleic anhydride graft-polypropylene-ethylene copolymers, polyethylene chloride, polypropylene chloride, EPDM (ethylene-propylene-diene polymer), polypropylene chloride, phenol resins, silicone resins, and epoxy resins. One or more types of these may be used.

A mixed aqueous dispersion composition can be obtained by stirring and mixing the two or more dispersion compositions at standard temperature. The base resin of the dispersion composition of the present invention may be melt-blended or dry-blended beforehand with the base resin of the other dispersion composition to be mixed with it, followed by dispersion in water. The present invention is not specifically restricted by any manufacturing method.

### Coatings on Substrates

The aqueous dispersion composition of the present invention or mixed aqueous dispersion composition (aqueous dispersion composition of the present invention with Other Dispersion(s)) can be applied on any type of substrate as a coating. The coated substrate, particularly a coated film, made by this method has a good waterproofness.

The aqueous dispersions can be applied to a substrate for coating using a conventional method such as that using a roll coater or a bar coater, a method involving spraying, a method using an air-knife coater, a method using a brush, or a method involving a substrate in the aqueous dispersion. Water is evaporated and a uniform film can be obtained by heating and drying after coating.

Examples of the substrate include molded products made by molding an olefin copolymer such as high, medium, or low-density polyethylene, ethylene-α-olefin copolymer, ethylene-vinyl acetate copolymer, ethylene-(meth)acrylic ester copolymer, ethylene-(meth)acrylic acid copolymer or ionomer, ethylene-(meth)acrylic acid-(meth)acrylic ester copolymer or ionomer, polypropylene, poly-1-butene, or poly-4-methyl-1-pentene; styrene resins such as polystyrene, ABS resin, or styrene-butadiene block copolymer; polyesters such as polyethylene terephthalate; polyamides such as nylon 6 or nylon 66; polyvinyl chloride; or their blends; natural materials such as a film, metal (iron, copper, aluminum, or stainless steel), wood, or paper; natural or synthetic leather; fibers such as nylon, polyester, acryl, urethane, or rayon; and fabrics.

The thickness of the coated film is not specifically restricted, but is suitably 1-20 micrometers (µm), particularly 1-5 µm. The coated film may be crosslinked by irradiating using an electron beam to improve the waterproofness or durability.

### EXAMPLES

The following examples are illustrative of the present invention. All parts in the following examples are based on weight.

### 1. Raw materials and additives

The ethylene-methacrylic acid copolymers ("Copolymers") used in the examples are described in Table I. The ammonia used in the experiments was a 29% aqueous solution made by Kanto Kagaku K.K.

**Table I**

| Composition | | FR (dg/min) |
|---|---|---|
| Copolymer 1: | Ethylene/methacrylic acid (80 wt%/20 wt%) | 60 |
| Copolymer 2: | Ethylene/methacrylic acid (80 wt%/20 w%) | 300 |
| Copolymer 3: | Ethylene/methacrylic acid (80 wt%/20 wt%) | 500 |

### 2. Methods for evaluating the properties

Properties of the dispersions set forth in Table III were determined as follows:
1. Appearance: The measurement of Appearance of the resulting dispersions was by visual examination. The Appearance was considered to be
   a."Uniform" if the dispersion contained no non-dispersed substances and remained stable for an extended period of time;
   b."Non-uniform" if the dispersion contained non-dispersed substances or precipitates; and
   c."Not dispersed" if the substances did not disperse or remain dispersed in the aqueous media.
2. pH: Based on JIS K6833. Obtained by measurement of a sample using a commercial pH meter Horiba Custany LAB "F12" pH meter.
3. Viscosity: Based on JIS K6833. Obtained by measurement using a single-cylinder rotary viscometer Synchro Lectric Viscometer.
4. Average Particle size: Measured by laser beam scattering-type particle size distribution measuring apparatus NICOMP 370HPL.

### APPLICATION EXAMPLES 1-3

Copolymers, ammonia, and distilled water were introduced into an autoclave (300 mL) in the amounts shown in Table II, followed by stirring at 150°C for 60 minutes. The weight percent solid component in the aqueous mixture in each case was 25 wt%. Evaluation results for dispersion properties are shown in Table III.

### COMPARATIVE EXAMPLES 1-4

Ammonia was used in the amounts shown in Table II in the same process used in Application Examples 1-3. Evaluation results for the dispersion property are shown in Table III.

**Table II**

| Composition | | |
|---|---|---|
| | Resin | Neutralization degree (NH₃) (%) |
| Application Example 1 | Copolymer 1 | 130 |
| Application Example 2 | Copolymer 2 | 130 |
| Application Example 3 | Copolymer 3 | 130 |
| Comparative Example 1 | Copolymer 1 | 100 |
| Comparative Example 2 | Copolymer 2 | 100 |
| Comparative Example 3 | Copolymer 3 | 100 |
| Comparative Example 4 | Copolymer 1 | 75 |
| Comparative Example 5 | Copolymer 3 | 75 |

**Table III**

| | Appearance | pH | Viscosity | Average particle size |
|---|---|---|---|---|
| Application Example 1 | Uniform | 11.1 | 225 | 53 |
| Application Example 2 | Uniform | 11.1 | 400 | 22 |
| Application Example 3 | Uniform | 11.0 | 705 | 24 |
| Comparative Example 1 | Not dispersed | | | |
| Comparative Example 2 | Non-uniform | 10.9 | 370 | 26 |
| Comparative Example 3 | Non-uniform | 11.0 | 555 | 29 |
| Comparative Example 4 | Not dispersed | | | |
| Comparative Example 5 | Not dispersed | | | |

## Claims

1. A stable, uniform, aqueous dispersion consisting essentially of a dispersion in water of component (A), an ethylene-methacrylic acid copolymer containing 15-35 wt% methacrylic acid, and component (B), ammonia in an amount required for neutralizing 110-150% of the carboxyl groups of component (A).

2. The aqueous dispersion of claim 1 wherein the ethylene-methacrylic acid contains 18-30 wt% methacrylic acid.

3. The aqueous dispersion of claim 1 wherein the ethylene-methacrylic acid contains 15-25 wt% methacrylic acid.

4. The aqueous dispersion of claims 1, 2, or 3 wherein the ammonia is present in an amount sufficient to neutralize 120-140% of the carboxyl groups.

5. The aqueous dispersion of claim 1 wherein the ethylene-methacrylic acid copolymer comprises 5-50 wt% of the dispersion and preferably has a melt flow rate of 50-2000 grams/10 minutes at 190°C/2160 gram load.

6. The aqueous dispersion of claim 3 wherein the ethylene-methacrylic acid copolymer comprises 5-50 wt% of the dispersion and preferably has a melt flow rate of 50-2000 grams/10 minutes at 190°C/2160 gram load.

7. The aqueous dispersion of claim 4 wherein the ethylene-methacrylic acid copolymer has a melt flow rate of 60-1500 grams/10 minutes at 190°C/2160 gram load.

8. The aqueous dispersion of claim 5 wherein the ethylene-methacrylic acid copolymer has a melt flow rate of 60-1500 grams/10 minutes at 190°C/2160 gram load.

9. A process for making a stable, uniform, aqueous dispersion of ethylene-methacrylic acid consisting essentially of mixing an ethylene-methacrylic acid copolymer containing 15-35 wt% methacrylic acid in water in the presence of sufficient ammonia to neutralize 110 to to 150% of the carboxylic acid groups in the ethylene-methacrylic acid copolymer for a sufficient time to uniformly disperse the ethylene-methacrylic acid copolymer in the water.

10. The process of claim 9 wherein the mixing is carried out at a temperature of about 90 to about 150°C for about 10 minutes to about 2 hours.

## Patentansprüche

1. Stabile, einheitliche und von Alkalimetall freie, wässrige Dispersion, welche im Wesentlichen besteht aus einer Dispersion in Wasser von einer Komponente (A), einem Ethylen-Methacrylsäure-Copolymer, das 15 - 35 Gew.-% Methacrylsäure enthält, und einer Komponente (B), Ammoniak in einer Menge, wie sie erfordert ist zur Neutralisation von 110 - 150% der Karboxylgruppen der Komponente (A).

2. Wässrige Dispersion gemäß Anspruch 1, bei welcher die Ethylen-Methacrylsäure 18 - 30 Gew.-% Methacrylsäure enthält.

3. Wässrige Dispersion gemäß Anspruch 1, bei welcher die Ethylen-Methacrylsäure 15 - 25 Gew.-% Methacrylsäure enthält.

4. Wässrige Dispersion gemäß den Ansprüchen 1, 2 oder 3, bei welcher das Ammoniak in einer Menge vorhanden ist, die groß genug ist um 120 - 140% der Karboxylgruppen zu neutralisieren.

5. Wässrige Dispersion gemäß Anspruch 1, bei welcher das Ethylen-Methacrylsäure-Copolymer 5 - 50 Gew.-% der Dispersion enthält und vorzugsweise eine Schmelzflussgeschwindigkeit von 50 - 2000 Gramm/10 Minuten bei 190°C/2160 Gramm Beladung aufweist.

6. Wässrige Dispersion gemäß Anspruch 3, bei welcher das Ethylen-Methacrylsäure-Copolymer 5 - 50 Gew.-% der Dispersion enthält und vorzugsweise eine Schmelzflussgeschwindigkeit von 50 - 2000 Gramm/10 Minuten bei 190°C/2160 Gramm Beladung aufweist.

7. Wässrige Dispersion gemäß Anspruch 4, bei welcher das Ethylen-Methacrylsäure-Copolymer eine Schmelzflussgeschwindigkeit von 60 - 1500 Gramm/10 Minuten bei 190°C/2160 Gramm Beladung aufweist.

8. Wässrige Dispersion gemäß Anspruch 5, bei welcher das Ethylen-Methacrylsäure-Copolymer eine Schmelzflussgeschwindigkeit von 60 - 1500 Gramm/10 Minuten bei 190°C/2160 Gramm Beladung aufweist.

9. Verfahren zur Herstellung einer stabilen, einheitlichen und von Alkalimetall freien, wässrigen Dispersion von Ethylen-Methacrylsäure, welches im Wesentlichen besteht aus einem Mischen eines Ethylen-Methacrylsäure-Copolymers mit 15 - 35 Gew.-% Methacrylsäure in Wasser in Anwesenheit einer ausreichend großen Menge Ammoniak, um 110 - 150% der Karbonsäuregruppen in dem Ethylen-Methacrylsäure-Copolymer während einer ausreichenden Zeit zu neutralisieren, um das Ethylen-Methacrylsäure-Copolymer gleichmäßig in dem Wasser zu dispergieren.

10. Verfahren gemäß Anspruch 9, bei welchem das Mischen bei einer Temperatur von etwa 90 bis etwa 150°C während einer Zeitdauer von 10 Minuten bis zu etwa 2 Stunden durchgeführt wird.

## Revendications

1. Dispersion aqueuse stable, uniforme et sans métal alcalin constituée essentiellement d'une dispersion dans de l'eau d'un composant (A), un copolymère d'éthylène-acide méthacrylique contenant 15-35% en poids d'acide méthacrylique, et d'un composant (B), de l'ammoniaque dans une quantité requise pour neutraliser 110-150% des groupes carboxyles du composant (A).

2. Dispersion aqueuse suivant la revendication 1, dans laquelle l'éthylène-acide méthacrylique contient 18-30% en poids d'acide méthacrylique.

3. Dispersion aqueuse suivant la revendication 1, dans laquelle l'éthylène-acide méthacrylique contient 15-25% en poids d'acide méthacrylique.

4. Dispersion aqueuse suivant la revendication 1, 2 ou 3, dans laquelle l'ammoniaque est présente dans une quantité suffisante pour neutraliser 120-140% des groupes carboxyles.

5. Dispersion aqueuse suivant la revendication 1, dans laquelle le copolymère d'éthylène-acide méthacrylique comprend 5-50% en poids de la dispersion et possède de préférence un indice de fluidité de 50-2000 grammes/10 minutes à 190°C/charge de 2160 grammes.

6. Dispersion aqueuse suivant la revendication 3, dans laquelle le copolymère d'éthylène-acide méthacrylique comprend 5-50% en poids de la dispersion et possède de préférence un indice de fluidité de 50-2000 grammes/10 minutes à 190°C/charge de 2160 grammes.

7. Dispersion aqueuse suivant la revendication 4, dans laquelle le copolymère d'éthylène-acide méthacrylique possède un indice de fluidité de 60-1500 grammes/10 minutes à 190°C/charge de 2160 grammes.

8. Dispersion aqueuse suivant la revendication 5, dans laquelle le copolymère d'éthylène-acide méthacrylique possède un indice de fluidité de 60-1500 grammes/10 minutes à 190°C/charge de 2160 grammes.

9. Procédé pour la fabrication d'une dispersion aqueuse stable, uniforme et sans métal alcalin d'éthylène-acide méthacrylique constitué essentiellement du mélange d'un copolymère d'éthylène-acide méthacrylique contenant 15-35% en poids d'acide méthacrylique dans de l'eau en présence d'une quantité suffisante d'ammoniaque pour neutraliser de 110 à 150% des groupes acides carboxyliques dans le copolymère d'éthylène-acide méthacrylique pendant un temps suffisant pour disperser uniformément le copolymère d'éthylène-acide méthacrylique dans l'eau.

10. Procédé suivant la revendication 9, dans lequel le mélange est réalisé à une température d'environ 90 à environ 150°C pendant environ 10 minutes à environ 2 heures.
